# EUROPÄISCHE PATENTANMELDUNG

(11) **EP 4 383 030 A1**
(43) Veröffentlichungstag der Anmeldung: **12.06.2024**
(21) Anmeldenummer: 22212532.0
(22) Anmeldetag: 09.12.2022
(51) Int. Cl.: G05B 19/418, G05B 23/02

(54) **ÜBERWACHUNGSVERFAHREN FÜR EIN FERTIGUNGSSYSTEM, COMPUTERPROGRAMMPRODUKT, ÜBERGEORDNETE STEUEREINHEIT, FERTIGUNGSSYSTEM, SIMULATIONSPROGRAMMPRODUKT UND SEINE VERWENDUNG**

(71) Anmelder: Siemens Aktiengesellschaft, 80333 München (DE)
(72) Erfinder: Männer, Andres, 09236 Claußnitz OT Diethensdorf (DE)
(74) Vertreter: Siemens Patent Attorneys

(57) **Zusammenfassung**

Die Erfindung betrifft ein Überwachungsverfahren (100) für ein Fertigungssystem (50), das eine Mehrzahl an Bearbeitungsvorrichtungen (10, 10.1, 10.2, 10.3) zum Bearbeiten eines Werkstücks (20) umfasst. Darin wird bei einem Bearbeiten des Werkstücks (20) zumindest ein vorgebbarer Werkstückparameter (22) mittels einer Erfassungsvorrichtung (16) der ersten Bearbeitungsvorrichtung (10.1) erfasst. Weiter wird ein Spiegel-Werkstückparameter (37) durch Simulieren der durchgeführten Bearbeitung ermittelt, wobei der Spiegel-Werkstückparameter (37) mit dem Werkstückparameter (22) korrespondiert. Ferner erfolgt ein Erkennen eines bestimmungswidrigen Betriebszustands, wenn eine Differenz zwischen dem Spiegel-Werkstückparameter (37) dem Werkstückparameter (22) einen vorgebbaren Schwellenwert (45) betragsmäßig übersteigt. Der Spiegel-Werkstückparameter (37) ist dem Werkstück (20) werkstückspezifisch zugeordnet und wird in einem Datensatz (34) gespeichert, der für eine zweite Bearbeitungsvorrichtung (10.2) des Fertigungssystems (50) auswertbar bereitgestellt wird. Die Erfindung betrifft ebenso ein Computerprogrammprodukt (60) zum Durchführen des Überwachungsverfahrens (100) und eine entsprechend ausgebildete übergeordnete Steuereinheit (40) und ein Fertigungssystem (50) mit solch einer übergeordneten Steuereinheit (40). Weiter betrifft die Erfindung ein Simulationsprogrammprodukt (70) zum Simulieren der Bearbeitung des Werkstücks (20) und die Verwendung eines derartigen Simulationsprogrammprodukts (70).

## Beschreibung

Die Erfindung betrifft ein Überwachungsverfahren für ein Fertigungssystem und ein Computerprogrammprodukt hierfür. Weiter betrifft die Erfindung eine übergeordnete Steuereinheit und ein entsprechend ausgestattetes Fertigungssystem. Ferner betrifft die Erfindung ein Simulationsprogrammprodukt sowie seine Verwendung.

Aus der Internationalen Anmeldung WO 2020/052083 A1 ist eine Werkzeugmaschine bekannt, die eine Steuerungskomponente aufweist, der ein Digitaler Zwilling zugeordnet ist. Der Digitale Zwilling greift auf eine innere Datenstruktur der Steuerungskomponente zu und ist auf einem IoT-Edge-Device implementiert. Der Digitale Zwilling weist eine als IoT-Gateway dienende Softwarekomponente auf und erlaubt einer externen Applikation lesenden und/oder schreibenden Zugriff die Datenstruktur.

Die Europäische Patentanmeldung EP 3 650 968 A1 zeigt ein Verfahren zum Betrieb einer Werkzeugmaschine, in dem eine App mit einem virtuellen Container in einen Speicher der Werkzeugmaschine heruntergeladen wird. Ein direkter Start der App wird verhindert. In der App werden weiter Bezeichner ermittelt und mit einer Positiv- bzw. Negativliste verglichen. Nicht über die Positiv- bzw. Negativliste identifizierbare Bezeichner werden durch einen automatisch generierten Zielausdruck ersetzt und erst danach die App gestartet.

In unterschiedlichen industriellen Anwendungen werden zunehmend leistungsfähige Fertigungssysteme eingesetzt, um komplexe Werkstückbearbeitungen vorzunehmen. Ebenso werden steigende Anforderungen an die Flexibilität von Fertigungssystemen gestellt. Zur Sicherung von Qualitätsanforderungen an die bearbeiteten Werkstücke und zur Vermeidung von Schäden am Fertigungssystem sind leistungsfähige Überwachungsverfahren notwendig. Der Erfindung liegt die Aufgabenstellung zugrunde, eine Möglichkeit zum Überwachen eines Betriebs eines Fertigungssystems bereitzustellen, das in zumindest einem der skizzierten Aspekte eine Verbesserung bietet.

Die Aufgabenstellung wird durch ein erfindungsgemäßes Überwachungsverfahren für ein Fertigungssystem gelöst, das zu einem Bearbeiten eines Werkstücks ausgebildet ist. Das Fertigungssystem, auf dem das Überwachungsverfahren durchzuführen ist, umfasst eine Mehrzahl an Bearbeitungsvorrichtungen, die zum Bearbeiten des Werkstücks miteinander verkettet sind und im bestimmungsgemäßen Betrieb zusammenwirken. Das Überwachungsverfahren umfasst einen ersten Schritt, in dem das Fertigungssystem in einem aktiven Betriebszustand bereitgestellt wird. Im aktiven Betriebszustand ist das Fertigungssystem montiert und es ist ein Werkstück bestimmungsgemäß zugeführt, das zu bearbeiten ist. Ebenso wird die Bearbeitung des Werkstücks durch eine erste Bearbeitungsvorrichtung im aktiven Zustand durchgeführt. Weiter weist das Überwachungsverfahren einen zweiten Schritt auf, in dem zumindest ein vorgebbarer Werkstückparameter mittels einer entsprechend geeigneten Erfassungsvorrichtung erfasst wird. Der Werkstückparameter kann durch eine Benutzereingabe oder einen Algorithmus, insbesondere eine Künstliche Intelligenz, und/oder ein Computerprogrammprodukt vorgegeben sein, mit dem das Überwachungsverfahren umgesetzt wird. Die Erfassungsvorrichtung ist hierbei einer der Bearbeitungsvorrichtungen, beispielsweise der ersten Bearbeitungsvorrichtung, zugeordnet. Der Werkstückparameter kann eine Größe sein, die unmittelbar am Werkstück messbar ist, beispielsweise eine Abmessung, eine Oberflächenrauigkeit, eine elektrische Leitfähigkeit, eine thermische Leitfähigkeit, eine Temperatur oder ein Temperaturverlauf. Alternativ oder ergänzend kann der Werkstückparameter zumindest ein zugehöriger Bearbeitungsvorrichtungs-Parameter sein, aus dem eine Eigenschaft des Werkstücks ableitbar ist, beispielsweise ein Steuerungsprotokoll der im ersten Schritt durchgeführten Bearbeitung des Werkstücks. Ebenso kann der Werkstückparameter eine Größe sein, die durch ein Verarbeiten des zumindest einen Bearbeitungsvorrichtungs-Parameter ermittelt ist. Insbesondere kann der Werkstückparameter jegliche erfassbare Größe sein, die über Raum und Zeit variabel ist und über eine Messung an einer Komponente der Bearbeitungsvorrichtung erfassbar ist, durch die Rückschlüsse auf einen vorliegenden Zustand des Werksstücks möglich sind.

Darüber hinaus umfasst das Überwachungsverfahren einen dritten Schritt, in dem ein Spiegel-Werkstückparameter ermittelt wird. Der Spiegel-Werkstückparameter wird durch ein Simulieren des Bearbeitens aus dem ersten Schritt ermittelt. Dazu liegt ein digitales Abbild des Werkstücks vor, das in ersten Schritt bearbeitet wird. Der Spiegel-Werkstückparameter korrespondiert mit dem Werkstückparameter, der im zweiten Schritt ermittelt wird. Der Spiegel-Werkstückparameter ist dazu ausgebildet, eine Eigenschaft des Werkstücks abzubilden, das im ersten Schritt bearbeitet wird. Ebenso umfasst das Überwachungsverfahren einen vierten Schritt, in dem ein bestimmungswidriger Betriebszustand des der ersten Bearbeitungsvorrichtung erkannt wird. Im vierten Schritt wird zwischen dem Spiegel-Werkstückparameter und dem Werkstückparameter eine Differenz gebildet, die mit einem vorgebbaren Schwellenwert verglichen wird. Der Schwellenwert kann durch eine Benutzereingabe, einen Algorithmus, insbesondere eine Künstliche Intelligenz, und/oder das Computerprogrammprodukt vorgegeben sein, mit dem das Überwachungsverfahren umgesetzt wird. Wenn die Differenz den vorgebbaren Schwellenwert betragsmäßig übersteigt, wird der bestimmungswidrige Betriebszustand der ersten Bearbeitungsvorrichtung erkannt. Andernfalls wird ein bestimmungsgemäßer Betriebszustand erkannt. Ein erkannter bestimmungswidriger Betriebszustand der ersten Bearbeitungsvorrichtung kann durch eine Warnung an einen Benutzer, eine lokale Steuereinheit der ersten Bearbeitungsvorrichtung, und/oder eine übergeordnete Steuereinheit des Fertigungssystems angezeigt werden.

Erfindungsgemäß wird zumindest der zugehörige Spiegel-Werkstückparameter werkstückspezifisch zugeordnet in einem Datensatz gespeichert. Der Datensatz ist derart ausgebildet, insbesondere durch seine Formatierung, dass er durch eine zweite Bearbeitungsvorrichtung auswertbar ist. Die zweite Bearbeitungsvorrichtung gehört zu Fertigungssystem und ist mit der ersten Bearbeitungsvorrichtung verkettet, um so die angestrebte Bearbeitung des Werkstücks zu erlauben. Die zweite Bearbeitungsvorrichtung kann im Ablauf des Fertigungssystems der ersten Bearbeitungsvorrichtung nachgeschaltet sein. Der Datensatz wird im erfindungsgemäßen Überwachungsverfahren für die zweite Bearbeitungsvorrichtung bereitgestellt. Dies kann beispielsweise durch ein unmittelbares Übermitteln des Datensatzes von der ersten an die zweite Bearbeitungsvorrichtung erfolgen, oder durch ein mittelbares Übermitteln über eine übergeordnete Steuereinheit, die mit der ersten und zweiten Bearbeitungsvorrichtung über eine kommunikative Datenverbindung gekoppelt ist.

Erfassungsvorrichtungen an Bearbeitungsvorrichtungen bieten eine gesteigerte Abtastrate und stellen schnell erhöhte Mengen präziser Messdaten bereit. Weiter verfügen Fertigungssysteme, also deren Komponenten, über zunehmende Rechenkapazitäten, so dass das Simulieren im dritten Schritt ausreichend schnell durchführbar ist. Dementsprechend sind betriebsbegleitend mit dem Werkstückparameter und dem zugehörigen Spiegel-Werkstückparameter Daten erzeugbar, die einen schnellen Abgleich erlauben, bei dem ein bestimmungswidriger Betriebszustand der ersten Bearbeitungsvorrichtung erkennbar ist. Beispielsweise ist ein bestimmungswidriger Betriebszustand der ersten Bearbeitungsvorrichtung erkennbar, wenn bei einer Oberflächenbearbeitung eine bestimmte Oberflächenrauigkeit erwartet wird, diese bei der Bearbeitung des Werkstücks nicht erreicht wird. Mit dem Datensatz, der zumindest den Spiegel-Werkstückparameter umfasst, wird im Wesentlichen ein Digitaler Zwilling des Werkstücks in einem Zustand erstellt, in dem das Werkstück an die zweite Bearbeitungsvorrichtung weiterzugeben ist. Dadurch können auch bestimmungswidrige Betriebszustände der ersten Bearbeitungsvorrichtung erkannt, werden wenn sich das Werkstück an einer nachgeschalteten Position befeindet, insbesondere an bzw. in der zweiten Bearbeitungsvorrichtung. Insgesamt wird so die Nachvollziehbarkeit einer Mängelentstehung im Betrieb des Fertigungssystems einfacher gewährleistet. Beispielsweise ist der im erfindungsgemäßen Überwachungsverfahren erzeugte Datensatz durch eine Künstliche Intelligenz unabhängig vom Fertigungssystem auswertbar. Dadurch sind auch in komplexen Fertigungssystemen Mängelursachen selbsttätig ermittelbar, was ein beschleunigtes Einleiten von Gegenmaßnahmen erlaubt. Folglich werden Ausfallzeiten des Fertigungssystems minimiert und dessen technisches Potential stärker ausgeschöpft. Ebenso sind ausgehend vom beanspruchten Überwachungsverfahren Produktionswege im Fertigungssystem optimierbar.

In einer Ausführungsform des beanspruchten Überwachungsverfahrens wird auch der Werkstückparameter korrespondierend zum Spiegel-Werkstückparameter im Datensatzwerkstückspezifisch zugeordnet gespeichert. Dabei entspricht der Werkstückparameter funktionell dem Spiegel-Werkstückparameter, bildet also dasselbe physikalische Phänomen beim Bearbeiten des Werkstücks ab. Es können mehrere Werte des Werkstückparameters und des zugehörigen Spiegel-Werkstückparameters, die in korrespondierenden Bearbeitungssituationen entstehen, entsprechend im Datensatz zeitlich sortiert vorliegen. Dadurch wird der zweiten Bearbeitungsvorrichtung ein aussagekräftigerer Datensatz bereitgestellt, der eine detaillierte Auswertung erlaubt, ob ein bestimmungswidriger Betriebszustand in der ersten Bearbeitungsvorrichtung vorliegt. Zu jedem Wert des Werkstückparameters kann im Datensatz ein im Wesentlichen zeitlich synchronisierter Wert des Spiegel-Werkstückparameters vorliegen. Dementsprechend kann eine Taktrate, in der der Werkstückparameter gespeichert wird, derart vorgegeben sein, dass sie einer Taktrate des Simulierens im dritten Schritt entspricht. Umgekehrt kann die Taktrate des Simulierens im dritten Schritt korrespondierend zu einer Abtastrate des Werkstückparameters vorgegeben werden. Die Taktrate und/oder die Abtastrate können durch eine Benutzereingabe, einen Algorithmus, insbesondere eine Künstliche Intelligenz und/oder durch das Computerprogrammprodukt vorgegeben werden, durch das das Überwachungsverfahren umgesetzt wird. Der Datensatz kann dadurch speicherplatzsparend und erzeugt werden. Eine spätere Synchronisation, also Anpassung, beispielsweise durch Interpolation, ist somit entbehrlich, was wiederum eine beschleunigte Verarbeitung des Datensatzes erlaubt. Ferner kann abhängig von der Bearbeitungssituation gezielt die Taktrate der Simulation angepasst werden, um so eine besonders präzise Simulation mit verkürzten Zeitschritten zu erzeugen. Die erhöhte Abtastrate, die mit modernen Erfassungsmitteln erzielbar ist, ist dadurch situationsgerecht nutzbar.

Des Weiteren kann im beanspruchten Überwachungsverfahren zumindest eine der Bearbeitungsvorrichtungen eine Werkzeugmaschine, beispielsweise eine Mehrachsfräsmaschine, ein Roboter, eine Additive-Manufacturing-Vorrichtung, beispielsweise ein 3D-Drucker oder eine Lasersintermaschine, eine Erprobungsvorrichtung, oder eine Messvorrichtung, insbesondere ein 3D-Scanner oder eine Bilderkennungsvorrichtung, sein. Das beanspruchte Überwachungsverfahren ist dazu geeignet, einen bestimmungswidrige Betriebszustände in einer Werkzeugmaschine zu ermitteln, bei der durch einen vorzeitigen Verschleiß eines eingesetzten Werkzeugs, beispielsweise einen Fräser, nicht mehr die geforderte Fertigungspräzision, insbesondere Oberflächengüte, erzielbar ist. Weiter kann die Bearbeitungsvorrichtung auch eine Umformvorrichtung sein, durch die das Werkstück verformt wird, beispielsweise durch Schmieden, Walzen oder Biegen. Die für eine Werkzeugmaschine skizzierten Vorteile werden analog auch für einen Roboter als Bearbeitungsvorrichtung erzielt. Ebenso ist eine Erprobung eines vorliegenden Werkstücks mit dem Überwachungsverfahren überwachbar. Dazu können beispielsweise Messergebnisse einer Dichtigkeitsprüfung als Werkstückparameter mit zu erwartenden Ergebnissen verglichen werden, die durch Simulation der Erprobungsvorrichtung mit dem Werkstück ermittelt werden. Das beanspruchte Überwachungsverfahren ist für eine Vielzahl unterschiedlicher Bearbeitungsvorrichtungen, und damit unterschiedlicher Fertigungssysteme, geeignet und bietet ein breites Einsatzspektrum.

Im beanspruchten Überwachungsverfahren kann im dritten Schritt das Simulieren des Bearbeitens, das im ersten Schritt erfolgt, mittels einer ersten Überwachungseinheit erfolgen. Die erste Überwachungseinheit ist einer lokalen Steuereinheit der ersten Bearbeitungsvorrichtung zugeordnet. Die Überwachungseinheit kann beispielsweise als Funktion des Computerprogrammprodukts ausgebildet sein, mit dem das Überwachungsverfahren umgesetzt wird. Alternativ oder ergänzend kann die Überwachungseinheit auch ein Chip, eine Integrierte Schaltung, ein FPGA oder eine sonstige abgrenzbare Hardwareplattform sein, die dezidiert zum Durchführen einer Simulation eingerichtet ist. Die erste Überwachungseinheit kann beispielsweise als sogenanntes Edge-Gerät ausgebildet sein. Die lokale Steuereinheit mit der ersten Überwachungseinheit wiederum ist spezifisch der ersten Bearbeitungsvorrichtung fest zugeordnet. Dadurch sind die Rechenkapazität und kommunikativen Datenverbindungen zu einer übergeordneten Steuereinheit und/oder einer Erfassungsvorrichtung der ersten Bearbeitungsvorrichtung für das beanspruchte Überwachungsverfahren nutzbar. Das technische Potential der entsprechenden lokalen Steuereinheit ist so weiter ausschöpfbar. Analog zur ersten Überwachungseinheit kann auch je eine zweite, dritte, usw. Überwachungseinheit einer zweiten, dritte, usw. Bearbeitungsvorrichtung ausgebildet sein.

In einer weiteren Ausführungsform des beanspruchten Überwachungsverfahrens kann das Werkstück im zweiten Schritt zum Erfassen des Werkstückparameters unmittelbar erfasst werden. Beispielsweise kann das Werkstück mit der Erfassungsvorrichtung vermessen werden. Dazu kann die Erfassungsvorrichtung als Kamera ausgebildet sein. Alternativ kann der Werkstückparameter im zweiten Schritt durch Auswerten zumindest eines Bearbeitungsvorrichtungs-Parameters erfasst werden. Beispielsweise kann bei einer Mehrachsfräsmaschine ein zeitliches Leistungsaufnahmeprofil von Antriebsmitteln des Fräsers erfasst werden und dadurch eine Materialzerspanung am Werkstück erfasst werden. Ebenso können auch Anweisungen aus einem Teileprogramm separat oder in Kombination mit einem Bearbeitungsvorrichtungs-Parameter ausgewertet werden und daraus der Werkstück-Parameter ermittelt werden. Eine entsprechende Datenschnittstelle, durch die Anweisungen des Teileprogramms bereitgestellt werden, kann somit eine Erfassungsvorrichtung sein. Das beanspruchte Überwachungsverfahren ist dazu geeignet, eine Vielzahl an Messdaten zu nutzen, die ohnehin im Betrieb einer Bearbeitungsvorrichtung anfallen oder in einfacher Weise erfassbar sind. Durch ein Auswerten eines Bearbeitungsvorrichtungs-Parameters sind auch solche Größen als Werkstückparameter erfassbar, die nicht unmittelbar messbar sind. Beispielsweise ist eine Materialhärte in einem Härteofen nicht unmittelbar erfassbar. Jedoch sind Daten erfassbar, die ein durchfahrendes Temperaturprofil an einer Messstelle des Werkstücks wiedergeben. Durch einen Abgleich mit einem simulierten Temperaturprofil des Härteofens wiederum ist überprüfbar, ob dieser bestimmungsgemäß funktioniert. Das beanspruchte Überwachungsverfahren ist folglich an eine Vielzahl an Anwendungsfällen anpassbar und ist auf unterschiedliche Fertigungssystem übertragbar.

Ferner kann der dritte Schritt im beanspruchten Überwachungsverfahren durchgeführt werden, wenn das Werkstück zur zweiten Bearbeitungsvorrichtung transportiert wird oder an der zweiten Bearbeitungsvorrichtung vorliegt. Dementsprechend kann der dritte Schritt durchgeführt oder zumindest eingeleitet werden, wenn das Bearbeiten des Werkstücks aus dem ersten Schritt bereits abgeschlossen ist. Dadurch ist der Rechenaufwand für die Durchführung des Überwachungsverfahrens aufteilbar. Insbesondere können der dritte Schritt und/oder der vierte Schritt zumindest teilweise während einer Nebenzeitbewegung der ersten Bearbeitungsvorrichtung durchgeführt werden. Das beanspruchte Überwachungsverfahren kann somit auch auf Fertigungssystemen durchgeführt werden, in denen die Rechenkapazität zum synchronen Erfassen des vorgebbaren Werkstückparameters und Simulieren des korrespondierenden Bearbeitens des Werkstücks fehlt. Das beanspruchte Überwachungsverfahren ist folglich in einfacher Weise auf bestehenden Fertigungssystemen im Zuge einer Nachrüstung implementierbar.

Im beanspruchten Überwachungsverfahren kann der vierte Schritt, in dem ein bestimmungswidriger Betriebszustand erkannt wird, durchgeführt werden, wenn das Werkstück zur zweiten Bearbeitungsvorrichtung transportiert wird oder an der zweiten Bearbeitungsvorrichtung vorliegt. Dementsprechend ist die Bearbeitung des Werkstücks gemäß dem ersten Schritt abgeschlossen, wenn der vierte Schritt durchgeführt wird. Insbesondere, wenn eine Mehrzahl an Werkstückparametern und zugehörigen Spiegel-Werkstückparametern ermittelt werden, kann eine Auswertung dieser rechenaufwendig bzw. zeitaufwendig sein. Das beanspruchte Überwachungsverfahren erlaubt es folglich, auch den vierten Schritt des Überwachungsverfahrens zumindest teilweise während einer Nebenzeitbewegung der ersten Bearbeitungsvorrichtung durchzuführen. Das beanspruchte Überwachungsverfahren bietet damit bei seiner Umsetzung ausreichend Flexibilität, was eine Implementierung auf einem bestehenden Fertigungssystem vereinfacht.

Darüber hinaus können der zweite und dritte Schritt im beanspruchten Überwachungsverfahren im Wesentlichen gleichzeitig durchgeführt werden. Dazu können Anweisungen eines Teileprogramms, das im ersten Schritt abgearbeitet wird, im Wesentlichen synchron an die erste Bearbeitungsvorrichtung zur Umsetzung und an ein Simulationsprogrammprodukt als Eingabe gesendet werden. Das Simulationsprogrammprodukt ist dazu ausgebildet, ein Bearbeitungsverfahren des Werkstücks nachzubilden. Dementsprechend ist der dritte Schritt, bezogen auf die Bearbeitung des Werkstücks im ersten Schritt, in Echtzeit durchführbar. Dabei kann zwischen dem Bearbeiten im ersten Schritt und dem Simulieren im dritten Schritt eine Latenzzeit von unter 1000 ms vorliegen. Ebenso ist der vierte Schritt dadurch, bezogen auf den ersten Schritt, in Echtzeit durchführbar.

Dementsprechend ist ein bestimmungswidriger Betriebszustand der ersten Bearbeitungsvorrichtung erkennbar, bevor der erste Schritt, also die Bearbeitung des Werkstücks, abgeschlossen ist, also das Teileprogramm, abgearbeitet ist. Infolgedessen bietet das beanspruchte Überwachungsverfahren eine erhöhte Erkennungsgeschwindigkeit, was wiederum ein beschleunigtes Einleiten von Gegenmaßnahmen ermöglicht. Das Simulieren im dritten Schritt kann dem Bearbeiten im ersten Schritt vorauslaufend durchgeführt werden. Dazu sind beispielsweise Anweisungen des Teileprogramms einsetzbar. Beispielsweise kann dazu ein Vorlaufpuffer der ersten Bearbeitungsvorrichtung genutzt werden, in dem Anweisungen des Teileprogramms zwischengespeichert werden.

In einer weiteren Ausführungsform des beanspruchten Überwachungsverfahrens kann der vierte Schritt, in dem der bestimmungswidrige Betriebszustand der ersten Bearbeitungsvorrichtung erkannt wird, durch die erste Überwachungseinheit, eine zweite Überwachungseinheit und/oder die übergeordnete Steuereinheit des Fertigungssystems erfolgen. Die zweite Überwachungseinheit ist, analog der ersten Überwachungseinheit, einer lokalen Steuereinheit der zweiten Bearbeitungsvorrichtung zugeordnet sein. Die zweite Überwachungseinheit kann beispielsweise als Funktion des Computerprogrammprodukts ausgebildet sein, mit dem das Überwachungsverfahren umgesetzt wird. Alternativ oder ergänzend kann die zweite Überwachungseinheit auch ein Chip, eine Integrierte Schaltung, ein FPGA oder eine sonstige abgrenzbare Hardwareplattform sein, die dezidiert zum Durchführen einer Simulation eingerichtet ist. Die erste und/oder zweite Überwachungseinheit können jeweils beispielsweise als sogenanntes Edge-Gerät ausgebildet sein. Die lokale Steuereinheit mit der zweiten Überwachungseinheit wiederum ist spezifisch der zweiten Bearbeitungsvorrichtung fest zugeordnet. Die übergeordnete Steuereinheit des Fertigungssystems ist über eine kommunikative Datenverbindung mit den lokalen Steuereinheiten der ersten und zweite Bearbeitungsvorrichtung verbunden. Insgesamt können einzelne Schritte des beanspruchten Überwachungsverfahrens auf unterschiedlichen Hardwareplattformen durchgeführt werden. Die Schritte sind damit anforderungsgerecht auf geeignete Hardwareplattformen auslagerbar, ohne die Leistungsfähigkeit des Überwachungsverfahrens zu beeinträchtigen.

Ferner kann der Datensatz mit zumindest dem werkstückspezifisch zugeordneten Spiegel-Werkstückparameter und gegebenenfalls dem zugehörigen Werkstückparameter im beanspruchten Überwachungsverfahren einer Prozesskettensimulation bereitgestellt werden. Unter einer Prozesskettensimulation ist eine Überwachungssimulation zu verstehen, die dem Fertigungssystem übergeordnet ist. Beispielsweise kann durch die Prozesskettensimulation ein Fertigungswerk überwacht werden, zu dem das Fertigungssystem gehört. Die Prozesskettensimulation kann beispielsweise auf einer Operator Station ablaufen. Das beanspruchte Überwachungsverfahren erlaubt es, die gewonnenen Werkstückparameter bzw. Spiegel-Werkstückparameter für andere Verwendungen zur Verfügung zu stellen.

Des Weiteren kann im zweiten Schritt des beanspruchten Überwachungsverfahrens eine Konfiguration der erste Bearbeitungsvorrichtung erfasst werden und werkstückspezifisch im Datensatz gespeichert werden. Dadurch wird bei einer späteren weiteren Auswertung des Datensatzes eine Ursachenermittlung für den erkannten bestimmungswidrigen Betriebszustand der ersten Bearbeitungsvorrichtung unterstützt. Das beanspruchte Überwachungsverfahren erlaubt es damit, das wiederholte Auftreten von solcher zu vermeiden. Ebenso kann der Datensatz mit der Konfiguration der ersten Bearbeitungsvorrichtung für ein maschinelles Lernen, insbesondere ein Trainieren einer Künstlichen Intelligenz, einsetzbar, die bei der Umsetzung des beanspruchten Überwachungsverfahrens eingesetzt wird. Dies kann beispielsweise eine Künstliche Intelligenz sein, durch die der dritte Schritt des Überwachungsverfahrens durchgeführt wird. Ein derartiger Datensatz kann ferner weitere Größen umfassen, die neben dem Werkstückparameter im zweiten Schritt erfasst werden. Folglich kann der Datensatz auch Messwerte zu externen Störgrößen, insbesondere Vibrationsmesswerte oder Netzfilterwerte, umfassen.

Die zugrundeliegende Aufgabenstellung wird ebenso durch ein erfindungsgemäßes Computerprogrammprodukt gelöst, der zum Betreiben eines Fertigungssystems eingerichtet ist. Das Computerprogrammprodukt ist zu einem Erzeugen von Steuerbefehlen für eine erste und/oder eine zweite Bearbeitungsvorrichtung ausgebildet. Weiter ist das Computerprogrammprodukt zu einem Empfangen von Datensätzen von der ersten und/oder zweiten Bearbeitungsvorrichtung ausgebildet. Erfindungsgemäß ist das Computerprogrammprodukt dazu ausgebildet, zumindest eine Ausführungsform des oben skizzierten Überwachungsverfahrens zumindest teilweise durchzuführen. Das Computerprogrammprodukt kann dazu auf einer ersten Überwachungseinheit ausführbar sein, die zu einer lokalen Steuereinheit der ersten Bearbeitungsvorrichtung gehört. Alternativ oder ergänzend kann das Computerprogrammprodukt auf einer zweiten Überwachungseinheit ausführbar sein, die zu einer lokalen Steuereinheit der zweiten Bearbeitungsvorrichtung gehört. Weiter alternativ oder ergänzend kann das Computerprogrammprodukt auf einer übergeordneten Steuereinheit ausführbar sein, die mit der ersten und zweiten Bearbeitungsvorrichtung jeweils über eine kommunikative Datenverbindung verbunden ist. Das zugrundeliegende Überwachungsverfahren ist folglich in einfacher Weise durch ein Nachrüsten des erfindungsgemäßen Computerprogrammprodukts auf bestehenden Fertigungssystemen implementierbar. Das Computerprogrammprodukt kann eine Künstliche Intelligenz umfassen, die dazu ausgebildet ist, zumindest einer der Schritte des Überwachungsverfahrens durchzuführen.

Gleichermaßen wird die eingangs beschriebene Aufgabe durch eine erfindungsgemäße übergeordnete Steuereinheit gelöst. Die übergeordnete Steuereinheit ist über eine kommunikative Datenverbindung mit einer erste und einer zweiten Bearbeitungsvorrichtung verbindbar, die zu einem Fertigungssystem gehören. Weiter ist die übergeordnete Steuereinheit dazu ausgebildet, an die erste und zweite Bearbeitungseinheit Steuerbefehle auszugeben. Erfindungsgemäß ist die übergeordnete Steuereinheit dazu eingerichtet, zumindest eine Ausführungsform des oben dargestellten Überwachungsverfahrens durchzuführen. Dazu kann die übergeordnete Steuereinheit beispielsweise mit dem beanspruchten Computerprogrammprodukt ausgestattet sein. Die übergeordnete Steuereinheit kann weiter dazu ausgebildet sein, an einen Benutzer oder eine Datenschnittstelle eine Warnung auszugeben, wenn im durchgeführten Überwachungsverfahren ein bestimmungswidriger Betriebszustand der ersten Bearbeitungsvorrichtung erkannt wird.

Ebenso wird die oben skizzierte Aufgabenstellung durch ein erfindungsgemäßes Fertigungssystem gelöst, das eine erste und eine zweite Bearbeitungsvorrichtung umfasst. Die Bearbeitungsvorrichtungen sind zu einem Bearbeiten eines Werkstücks miteinander verkettet, also entsprechend aufgebaut, so dass das Werkstück von der ersten an die zweite Bearbeitungsvorrichtung transferierbar ist. Dazu kann zwischen der ersten und zweiten Bearbeitungsvorrichtung beispielsweise ein Transportsystem angeordnet sein. Das Fertigungssystem umfasst ferner eine übergeordnete Steuereinheit, die jeweils über eine kommunikative Datenverbindung mit der ersten und zweiten Bearbeitungsvorrichtung verbunden ist. Erfindungsgemäß ist die übergeordnete Steuereinheit nach einer der oben beschriebenen Ausführungsformen ausgebildet.

Ferner wird die oben dargelegte Aufgabe durch ein erfindungsgemäßes Simulationsprogrammprodukt gelöst, das zum Simulieren eines Bearbeitungsverhaltens eines Werkstücks ausgebildet ist. Das zu simulierende Werkstück ist ausgehend einem Rohzustand veränderbar, beispielsweise durch Umformen, subtraktives und/oder additives Fertigen. Das Bearbeitungsverhalten umfasst eine Formänderung des Werkstücks, die durch seine Bearbeitung hervorgerufen wird. Das Simulationsprogrammprodukt umfasst Befehle, die bei der Ausführung des Simulationsprogrammprodukts durch einen Computer diesen veranlassen, das Bearbeitungsverhalten des Werkstücks zu simulieren. Das erfindungsgemäße Simulationsprogrammprodukt ist dazu ausgebildet, zumindest einen Spiegel-Werkstückparameter des Werkstücks zu ermitteln. Dazu kann das Bearbeiten des Werkstücks simuliert, also nachgestellt werden. Das Simulationsprogrammprodukt kann dazu ausgebildet sein, bei seiner Ausführung das Werkstück als Spiegel-Werkstück nachzustellen und darzustellen. Erfindungsgemäß ist das Simulationsprogrammprodukt dazu ausgebildet, zumindest eine Ausführungsform des oben dargestellten Überwachungsverfahrens, insbesondere zumindest dessen zweiten und/oder vierten Schritt, durchzuführen. Dadurch sind mit dem Simulationsprogrammprodukt Spiegel-Werkstücke erzeugbar, die auch als Simulations-Werkstücke bezeichnet werden. Ein mit dem erfindungsgemäßen Simulationsprogrammprodukt erzeugtes Spiegel-Werkstück bzw. Simulations-Werkstück entspricht dem simulierten Werkstück. Durch das Simulationsprogrammprodukt sind werkstückspezifisch digitale Abbilder von Werkstücken erstellbar, die in einem Fertigungssystem bearbeitet werden.

Das Simulationsprogrammprodukt kann zur Simulation über ein Physik-Modul verfügen, in dem das Werkstück zumindest teilweise abgebildet ist. Hierzu kann das Werkstück beispielsweise in seiner Form zu Beginn des Bearbeitens, sowie dessen Formänderungsverhaltens nachgebildet sein, beispielsweise als digitales Abbild, das zum Simulationsprogrammprodukt gehört. Zum Formänderungsverhalten gehören Materialangaben, Materialkenngrößen, Steifigkeiten und/oder Oberflächenangaben. Alternativ oder ergänzend kann das Werkstück auch als Rechenmodell im Physik-Modul ausgebildet sein. Das Physik-Modul ist dazu ausgebildet, unter anderem das Zerspanungsverhalten des Werkstücks, dessen Biegeverhalten, dessen Schweißverhalten, dessen Härtungsverhalten und/oder dessen chemisches Verhalten, beispielsweise bei einer additiven Fertigung, unter einstellbaren Betriebsbedingungen nachzustellen. Zu den einstellbaren Betriebsbedingungen gehören beispielsweise eine Prozesstemperatur, eine Härte des eingesetzten Werkzeugs, dessen Schnittgeschwindigkeit und/oder ein Wärmeleitverhalten des Werkstücks gehören. Das Simulationsprogrammprodukt kann über eine Datenschnittstelle verfügen, über die entsprechende Daten über eine Benutzereingabe, eine Datenverbindung zu einer übergeordneten Steuereinheit eines Fertigungssystems, das ein entsprechendes Werkstück bearbeitet und/oder andere simulationsgerichtete Computerprogrammprodukte vorgebbar sind. Ebenso kann das Simulationsprogrammprodukt über eine Datenschnittstelle zu einem Ausgeben von Simulationsresultaten an einen Benutzer und/oder andere simulationsgerichtete Computerprogrammprodukte verfügen. Mittels des Simulationsprogrammprodukts ist beispielsweise eine defekte Bearbeitungsvorrichtung im Fertigungssystem erkennbar. Insbesondere ist das Bearbeitungsverhalten des realen Werkstücks, ausgedrückt beispielsweise durch Werkstückparameter, durch Abgleich mit den erzeugten Spiegel-Werkstückparametern auf Plausibilität überprüfbar. Dadurch ist das Bearbeitungsverhalten eines Werkstücks realitätstreu simulierbar. Insbesondere kann das Zerspanungsverhalten des Werkstücks mit hinreichender Präzision durch vereinfachte Modelle approximiert werden. Das erfindungsgemäße Computerprogrammprodukt erlaubt somit eine Modellierung der zugrundeliegenden Bearbeitung des Werkstücks bei einem reduzierten Bedarf an Rechenleistung. Hierdurch ist auch eine Vielzahl an derartigen Bearbeitungen von Werkstücken, beispielsweise in einem Fertigungssystem mit einer Vielzahl an Fertigungsvorrichtungen nachbildbar. Somit ist insgesamt in einfacher Weise ein besonders realitätstreues Prozessabbild vom Betrieb eines entsprechenden Fertigungssystems bereitstellbar. Ebenso kann durch das beanspruchte Simulationsprogrammprodukt infolge des reduzierten Rechenaufwands in einfacher Weise Echtzeitfähigkeit erreicht werden, was wiederum eine leistungsfähige Überwachung einer entsprechenden Bearbeitung des Werkstücks erlaubt. Das Computerprogrammprodukt kann als sogenannter Digitaler Zwilling ausgebildet sein, wie beispielsweise in der Druckschrift US 2017/286572 A1 beschrieben. Der Offenbarungsgehalt von US 2017/286572 A1 wird durch Verweisung in die vorliegende Anmeldung mit einbezogen. Dementsprechend ist der Digitale Zwilling des Werkstücks dazu ausgebildet, zumindest teilweise eine Ausführungsform des oben skizzierten Überwachungsverfahrens durchzuführen, insbesondere dessen dritten Schritt. Das Computerprogrammprodukt kann monolithisch ausgebildet sein, also vollständig auf einer Hardwareplattform ausführbar. Alternativ kann das Computerprogrammprodukt modular ausgebildet sei und eine Mehrzahl an Teilprogrammen umfassen, die auf separaten Hardwareplattformen ausführbar sind und über eine kommunikative Datenverbindung zusammenwirken. Eine solche kommunikative Datenverbindung kann eine Netzwerkverbindung, eine Internetverbindung und/oder eine Mobilfunkverbindung sein. Ferner kann durch das erfindungsgemäße Computerprogrammprodukt ein Betrieb des Fertigungssystems per Simulation erprobt und/oder optimiert werden. Weiter kann das Simulationsprogrammprodukt als Echtzeitsimulation ausgebildet sein.

Ferner wird die zugrundeliegende Aufgabenstellung durch eine erfindungsgemäße Verwendung eines Simulationsprogrammprodukts zu einem Überwachen eine Fertigungssystems gelöst, in dem ein Werkstück bearbeitet wird. Erfindungsgemäß ist das Simulationsprogrammprodukt dazu ausgebildet, ein Bearbeitungsverhalten des Werkstücks im Fertigungssystem zu simulieren. Dazu kann das Simulationsprogrammprodukt gemäß einer der oben beschriebenen Ausführungsformen ausgebildet sein. Das Simulationsprogrammprodukt stellt werkstückspezifische digitale Abbilder der Werkstücke bereit, die durch das Fertigungssystem bearbeitet werden. Das Fertigungssystem kann dazu eine erste und eine zweite Bearbeitungsvorrichtung aufweisen, die jeweils über eine kommunikative Datenverbindung mit einer übergeordneten Steuereinheit verbunden sind. Die digitalen Abbilder der Werkstücke sind dazu geeignet, analog den realen Werkstücken dem Fertigungsvorgang im Fertigungssystem zu folgen. Hierdurch wird eine werkstückspezifische Rückverfolgbarkeit gewährleistet, was ein einfaches identifizieren von fehlerhaften Werkstücken ermöglicht. Hierdurch kann eine Fehlerquote bei Endprodukten aus dem Fertigungssystem minimiert werden.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die Merkmale der in den Figuren gezeigten Ausführungsformen mit den oben skizzierten Merkmalen kombinierbar. Es zeigen im Einzelnen:
- FIG 1: eine erste Ausführungsform des beanspruchten Überwachungsverfahrens;
- FIG 2: eine zweite Ausführungsform des beanspruchten Überwachungsverfahrens.

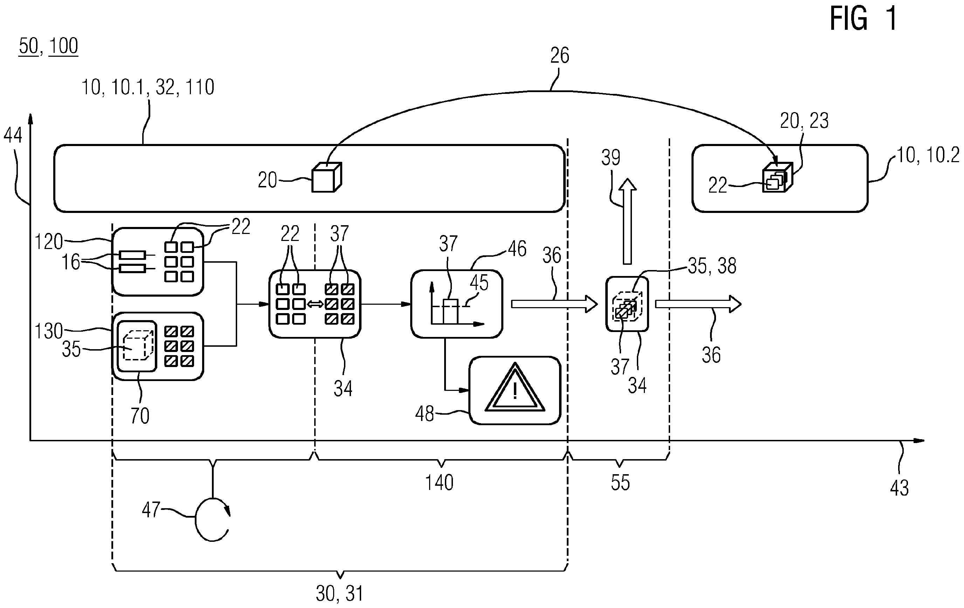

Eine erste Ausführungsform des beanspruchten Überwachungsverfahrens 100 ist in FIG 1 in einem Zeitdiagramm schematisch dargestellt. Das Überwachungsverfahren 100 wird an einem Fertigungssystem 50 durchgeführt, das Bearbeitungsvorrichtungen 10 aufweist. Dabei setzt die erste Bearbeitungsvorrichtung 10.1 ein Teileprogramm 32 um, durch das die Bearbeitung des Werkstücks 20 vorgegeben ist. Eine erste Bearbeitungsvorrichtung 10.1 und eine zweite Bearbeitungsvorrichtung 10.2 sind im Fertigungssystem 40 miteinander verkettet und dazu ausgebildet, ein Werkstück 20 zu bearbeiten. Das Diagramm in FIG 1 weist eine Zeitachse 43 auf, die an einen Referenzzeitpunkt 44 startet. Das Überwachungsverfahren 100 geht von einem ersten Schritt 110 aus, in dem das Werkstück 20 durch die erste Bearbeitungsvorrichtung 10.1 bearbeitet wird. Während der erste Schritt 110 abläuft, werden ein zweiter und ein dritter Schritt 120, 130 eingeleitet. Im zweiten Schritt 120, der parallel, also gleichzeitig, mit dem ersten Schritt 110 abläuft, wird mittels zumindest einer Erfassungsvorrichtung 16, die zur ersten Bearbeitungsvorrichtung 10.1 gehört, zumindest ein Werkstückparameter 22 erfasst. Werkstückparameter 22 sind als Zellen versinnbildlicht, die Datenzellen darstellen. Der zumindest eine Werkstückparameter 22 spiegelt eine Eigenschaft, wie beispielsweise eine Abmessung oder eine Oberflächenrauigkeit des Werkstücks 20. Alternativ bildet der zumindest eine Werkstückparameter 22 ein Bearbeitungsvorrichtungs-Parameter sein, der eine Betriebsgröße der ersten Bearbeitungsvorrichtung 10.2 beschreibt, aus der wiederum eine Eigenschaft des Werkstücks 20 ableitbar ist, die durch das entsprechende Bearbeiten hervorgerufen wird.

Im Wesentlichen gleichzeitig mit dem zweiten Schritt 120 wird der dritte Schritt 130 durchgeführt, in dem das im ersten Schritt 110 durchgeführte Bearbeiten des Werkstücks 20 simuliert wird. Dies erfolgt mittels eines Simulationsprogrammprodukts 70, in dem ein digitales Abbild 35 des Werkstücks 20 hinterlegt ist, das auch als Spiegel-Werkstück 35 bezeichnet wird. Das digitale Abbild 35 ist dem Werkstück 20 werkstückspezifisch zugeordnet. Durch das Simulieren wird im dritten Schritt 130 zumindest ein Spiegel-Werkstückparameter 37 ermittelt. Spiegel-Werkstückparameter 37 sind in FIG 1 durch schraffierte Zellen versinnbildlicht. Der mindestens eine Spiegel-Werkstückparameter 37 korrespondiert mit dem zumindest einen Werkstückparameter 22, so dass diese am Werkstück 20 bzw. dessen digitalen Abbild 35 den gleichen Vorgang physikalisch und digital beschreiben. Das Simulationsprogrammprodukt 70 ist als Digitaler Zwilling des Werkstücks 20 ausgebildet, der das digitale Abbild 35 umfasst. Weiter werden der zumindest eine Werkstückparameter 22 und der zumindest eine korrespondierende Spiegel-Werkstückparameter 37 in einem Datensatz 34 bereitgestellt. Der zweite Schritt 120, der dritte Schritt 130 und das Bereitstellen des Datensatzes 34 werden während des ersten Schritts 110 wiederholt durchgeführt und so der Datensatz 34 fortlaufend aktualisiert. Die wiederholte Durchführung des zweiten und dritten Schritts 120, 130 sind durch die Schleife 47 versinnbildlicht. Der Datensatz 34 wird ferner für einen vierten Schritt 140 des Überwachungsverfahrens 100 bereitgestellt.

Im vierten Schritt 140 wird zumindest ein Spiegel-Werkstück-parameter 37, der im dritten Schritt 130 ermittelt wird, mit einem einstellbaren Schwellenwert 45 verglichen. Durch den Abgleich 46 mit dem einstellbaren Schwellenwert 45 wird das Vorliegen eines bestimmungswidrigen Betriebszustands der ersten Bearbeitungsvorrichtung 10.1 erkannt. Wenn der zumindest eine Spiegel-Werkstückparameter 37 den einstellbaren Schwellenwert 45 betragsmäßig übersteigt, wird im vierten Schritt 140 eine Warnung 48 ausgegeben. Die Warnung 48 kann an einen Benutzer und/oder eine Datenschnittstelle ausgegeben werden. Der zweite, dritte und vierte Schritt 120, 130, 140 werden mittels einer ersten Überwachungseinheit 31 durchgeführt, die zu einer lokalen Steuereinheit 30 der ersten Bearbeitungsvorrichtung 10.1 gehört.

Nach dem Bearbeiten des Werkstücks 20 im ersten Schritt 110 liegt das Werkstück 20 als bearbeitetes Werkstück 23 vor und wird im Zuge einer Werkstückübergabe 26 an eine zweite Bearbeitungsvorrichtung 10.2 transportiert. Das bearbeitete Werkstück 23 ist an der zweiten Bearbeitungsvorrichtung 10.2 für eine weitere Bearbeitung vorgesehen. Die Werkstückübergabe 26 erfolgt während einer Transportphase 55, die auf den vierten Schritt 140 folgt. Die Bearbeitung des Werkstücks 20 zum bearbeiteten Werkstück 23 ist durch zumindest einen Werkstück-parameter 22 abbildbar. Mit Abschluss des ersten Schritts 110 liegt korrespondierend zum bearbeiteten Werkstück 23 der Datensatz 34 mit dem zumindest einen Spiegel-Werkstückparameter 37 vor, durch den die Simulation des ersten Schritts 110 am digitalen Abbild 35 des Werkstücks 20 nachgestellt ist. Durch die Verwendung des Simulationsprogrammprodukts 70 liegt folglich liegt ein bearbeitetes Spiegel-Werkstück 38 vor, das der zweiten Bearbeitungsvorrichtung 10.2 bereitgestellt wird. Es erfolgt somit eine Spiegel-Werkstückübergabe 36, in der der Datensatz 34 an die zweite Bearbeitungsvorrichtung 10.2 übertragen, also gesendet, wird. Die Spiegel-Werkstückübergabe 36 erfolgt im Wesentlichen während der Transportphase 55. In der Transportphase wird das bearbeitete Spiegel-Werkstück 38 bzw. eine Kopie hiervon, einer übergeordneten Prozesskettensimulation zur Verfügung gestellt. Dies erfolgt ein einer Prozesskettensimulations-Übergabe 39.

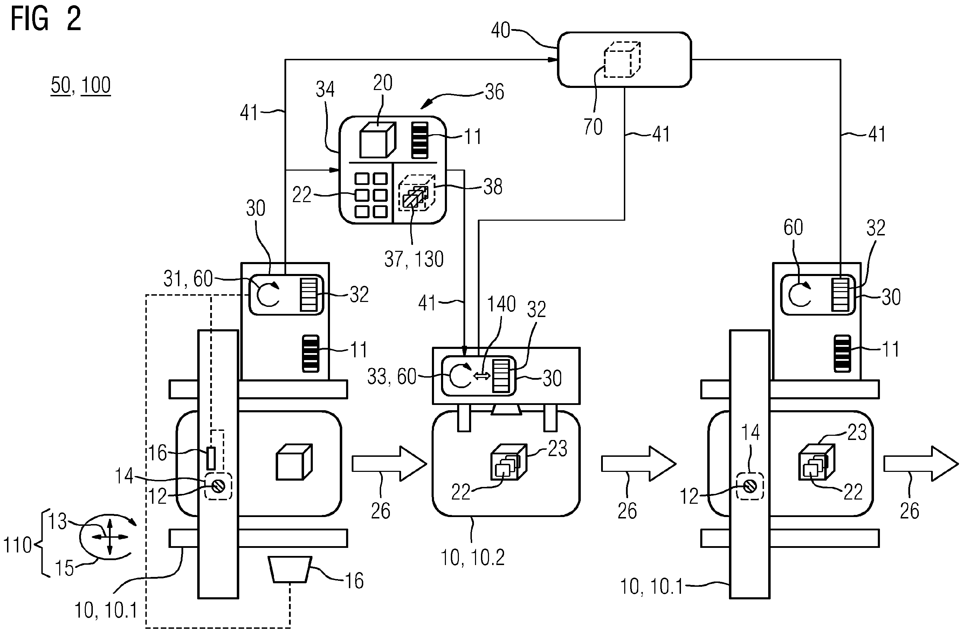

Eine zweite Ausführungsform des beanspruchten Überwachungsverfahrens 100 ist in FIG 2 schematisch gezeigt. Das Überwachungsverfahren 100 wird an einem Fertigungssystem 50 durchgeführt, das eine Mehrzahl an Bearbeitungsvorrichtungen 10 umfasst, die zu einem Bearbeiten eines Werkstücks 20 miteinander verkettet sind. Zu den Bearbeitungsvorrichtungen 10 gehören eine erste, eine zweite und eine dritte Bearbeitungsvorrichtung 10.1, 10.2, 10.3, die jeweils über eine kommunikative Datenverbindung 41 mit einer übergeordneten Steuereinheit 40 verbunden sind. Die erste Bearbeitungsvorrichtung 10.1 ist als Mehrachsfräsmaschine ausgebildet und weist als Werkzeug 12 einen Fräser auf, der durch ein Antriebsmittel 14 betreibbar ist. Die erste Bearbeitungsvorrichtung 10.1 wird in einer vorliegenden Konfiguration 11 eingesetzt und ist dazu ausgebildet, zum Bearbeiten des Werkstücks 20 in Abhängigkeit von einem Teileprogramm 32 eine Translationsbewegung 13 durchzuführen und eine Antriebsleistung 15 des Antriebsmittels 14 vorzugeben. Das Teileprogramm 32 wird von einer lokalen Steuereinheit 30 der ersten Bearbeitungsvorrichtung 10.1 abgearbeitet, also umgesetzt. Das Bearbeiten des Werkstücks 20 durch die erste Bearbeitungsvorrichtung 10.1 erfolgt während eines ersten Schritts 110 des Überwachungsverfahrens 100. Begleitend zum ersten Schritt 110 oder danach erfolgt ein zweiter Schritt 120, in dem mittels zumindest eines Erfassungsmittels 16, das der ersten Bearbeitungsvorrichtung 10.1 zugeordnet ist. Eines der Erfassungsmittel 16 ist als Sensor am Antriebsmittel 14 ausgebildet und ein weiteres Erfassungsmittel 16 ist als Kamera ausgebildet, die zu einem optischen Erfassen, also Beobachten, des Werkstücks 20 eingerichtet ist. Im zweiten Schritt 120 wird durch zumindest eines der Erfassungsmittel 16 ein Werkstückparameter 22 erfasst, der einer physikalischen Eigenschaft des Werkstücks 20 entspricht, beispielsweise dessen Abmessung oder Oberflächenrauigkeit. Der erfasste Werkstückparameter 22 wird in einem Datensatz 34 bereitgestellt.

Ferner wird im Überwachungsverfahren 100 ein dritter Schritt 130 durchgeführt, in dem die Bearbeitung des Werkstücks 20, also das Abarbeiten des Teileprogramms 32, simuliert wird. Dadurch wird zumindest ein Spiegel-Werkstückparameter 37 ermittelt, der dem Werkstückparameter 22 entspricht. Durch das Simulieren im dritten Schritt 130 wird ein verarbeitetes Spiegel-Werkstück 38 erstellt, das einem bearbeiteten Werkstück 23 entspricht, das wiederum das Resultat des ersten Schritts 110 ist. Der im dritten Schritt 130 ermittelte Spiegel-Werkstückparameter 37 wird ebenso im Datensatz 34 bereitgestellt. Der zumindest eine Spiegel-Werkstückparameter 37 und der zumindest eine Werkstückparameter 22 werden werkstückspezifisch im Datensatz 34 bereitgestellt. Ebenso wird die Konfiguration 11 der ersten Bearbeitungsvorrichtung 10.1 im Datensatz 34 gespeichert und bereitgestellt. Der Datensatz 34 umfasst mit dem zumindest einen Werkstückparameter 22 im Wesentlichen ein Protokoll der Bearbeitung des Werkstücks 20 im ersten Schritt 110 sowie mit dem zumindest einen Spiegel-Werkstückparameter 37 ein zugehöriges digitales Pendant. Das bearbeitete Spiegel-Werkstück 38 wiederum ist als Soll-Zustand des bearbeiteten Werkstücks 23 auffassbar. Der Datensatz 34 ist wiederum durch ein Simulationsprogrammprodukt 70 auslesbar, so dass das verarbeitete Spiegel-Werkstück 38 erzeugbar ist. Das Simulationsprogrammprodukt 70 wird auf der übergeordneten Steuereinheit 40 durchgeführt, der der Datensatz 34 auch bereitgestellt wird. Durch die Kombination des Simulationsprogrammprodukts 70 mit dem Datensatz 34 ist ein Digitaler Zwilling des Werkstücks 20 bzw. des bearbeiteten Werkstücks 23 bereitstellbar. Der Datensatz 34 wird durch ein Computerprogrammprodukt 60 erstellt, durch das zumindest der zweite und dritte Schritt 120, 130 durchgeführt werden. Das Computerprogrammprodukt 60 gehört zu einer ersten Überwachungseinheit 31 der lokalen Steuereinheit 30 der ersten Bearbeitungsvorrichtung. Die erste Überwachungseinheit 31 ist als sogenanntes Edge-Gerät ausgebildet.

Das bearbeitete Werkstück 23, also das von der ersten Bearbeitungsvorrichtung 10.1 bearbeitete Werkstück 20, wird bei einer Werkstückübergabe 26 an die zweite Bearbeitungsvorrichtung 10.2 weitergegeben. Korrespondierend dazu wird der Datensatz 34 bei einer Spiegel-Werkstückübergabe 36 an eine lokale Steuereinheit 30 der zweiten Bearbeitungsvorrichtung 10.2 weitergeleitet. Die zweite Bearbeitungsvorrichtung 10.2 ist als Erprobungsvorrichtung ausgebildet und dazu geeignet, das bearbeitete Werkstück 23 auf Maßhaltigkeit, Oberflächenrauigkeit und/oder Dichtigkeit zu überprüfen. Die Erprobung erfolgt hierbei in Abhängigkeit von einem Teileprogramm 32 auf der lokalen Steuereinheit 30 der zweiten Bearbeitungsvorrichtung 10.2. Auf der zweiten Bearbeitungsvorrichtung 10.2 wird der zumindest eine Werkstückparameter 22 mit dem korrespondierenden Werkstückparameter 22 verglichen indem zwischen diesen eine Differenz gebildet wird. Wenn die Differenz betragsmäßig einen einstellbaren Schwellenwert übersteigt, wird ein bestimmungswidriger Zustand der ersten Bearbeitungsvorrichtung 10.1 erkannt. Zusätzlich wird an der zweiten Bearbeitungsvorrichtung 10.2 wird durch Erprobung ermittelt, ob eine technische Größe des bearbeiteten Werkstücks 23 dem zumindest einen erfassten Werkstückparameter 22 entspricht. Dadurch kann weiter ein die Beschaffenheit des Werkstücks 20 bzw. des bearbeiteten Werkstücks 23 überprüft werden. Der vierte Schritt 140 wird auf einer zweiten Überwachungseinheit 33 durchgeführt, die der lokalen Steuereinheit 30 der zweiten Bearbeitungsvorrichtung 10.2 zugeordnet ist. Auf der zweiten Überwachungseinheit 33 wird dazu ein entsprechend ausgebildetes Computerprogrammprodukt 60 ausgeführt. Die Computerprogrammprodukte 60 auf der ersten und zweiten Überwachungseinheit 31, 33 stellen Teilprogramme dar, die zusammenwirken.

Das Fertigungssystem 50 verfügt weiter über eine dritte Bearbeitungsvorrichtung 10.3, die über eine kommunikative Datenverbindung 41 mit der übergeordneten Steuereinheit 40 verbunden ist. Die dritte Bearbeitungsvorrichtung 10.3 ist analog der ersten Bearbeitungsvorrichtung 10.1 als Mehrachsfräsmaschine ausgebildet und verfügt als Werkzeug 12 über einen Fräser, der durch ein Antriebsmittel 14 betreibbar ist. Die dritte Bearbeitungsvorrichtung 10.3 ist mit der zweiten Bearbeitungsvorrichtung 10.2 verkettet, so dass zwischen diesen eine Werkstückübergabe 26 durchführbar ist. Das bearbeitete Werkstück 23 ist durch die dritte Bearbeitungsvorrichtung 10.3 weiter bearbeitbar.

## Patentansprüche

1. Überwachungsverfahren (100) für ein Fertigungssystem (50), das zum Bearbeiten eines Werkstücks (20) ausgebildet ist, umfassend eine Mehrzahl an Bearbeitungsvorrichtungen (10, 10.1, 10.2, 10.3), die zum Bearbeiten des Werkstücks (20) miteinander verkettet sind, umfassend die Schritte:
a) Bereitstellen des Fertigungssystems (50) in einem aktiven Betriebszustand, in dem das Werkstück (20) durch eine erste Bearbeitungsvorrichtung (10.1) bearbeitet wird;
b) Erfassen zumindest eines vorgebbaren Werkstückparameters (22) mittels einer Erfassungsvorrichtung (16), die einer der Bearbeitungsvorrichtungen (10, 10.1, 10.2, 10.3) zugeordnet ist;
c) Ermitteln eines Spiegel-Werkstückparameters (37) durch Simulieren des im Schritt a) durchgeführten Bearbeitens, wobei der Spiegel-Werkstückparameter (37) mit dem Werkstück-parameter (22) nach Schritt b) korrespondiert;
d) Erkennen eines bestimmungswidrigen Betriebszustands der ersten Bearbeitungsvorrichtung (10.1), wenn eine Differenz zwischen dem Spiegel-Werkstückparameter (37) dem Werkstückparameter (22) einen vorgebbaren Schwellenwert (45) betragsmäßig übersteigt;
wobei zumindest der Spiegel-Werkstückparameter (37) werkstückspezifisch zugeordnet in einem Datensatz (34) gespeichert wird, der für eine zweite Bearbeitungsvorrichtung (10.2) des Fertigungssystems (50) auswertbar bereitgestellt wird.

2. Überwachungsverfahren (100) nach Anspruch 1, **dadurch gekennzeichnet, dass** im Datensatz (34) der Werkstückparameter (22) korrespondierend zum Spiegel-Werkstückparameter (37) werkstückspezifisch zugeordnet gespeichert wird.

3. Überwachungsverfahren (100) nach Anspruch 1 oder 2, **dadurch gekennzeichnet, dass** zumindest eine der Bearbeitungsvorrichtungen (10, 10.1, 10.2, 10.3) eine Werkzeugmaschine, ein Roboter, eine Umformvorrichtung oder eine Erprobungsvorrichtung ist.

4. Überwachungsverfahren (100) nach einem der Ansprüche 1 bis 3, **dadurch gekennzeichnet, dass** das Simulieren des im Schritt a) durchgeführten Bearbeitens durch eine erste Überwachungseinheit (31) erfolgt, die einer lokalen Steuereinheit (30) der ersten Bearbeitungsvorrichtung (10.1) zugeordnet ist.

5. Überwachungsverfahren (100) nach einem der Ansprüche 1 bis 4, **dadurch gekennzeichnet, dass** das Werkstück (20) im Schritt b) zum Erfassen des Werkstückparameters (22) unmittelbar erfasst wird oder der Werkstückparameter (22) durch Auswerten zumindest einer Werkzeugmaschinengröße erfasst wird.

6. Überwachungsverfahren (100) nach einem der Ansprüche 1 bis 5, **dadurch gekennzeichnet, dass** der Schritt c) durchgeführt wird, wenn das Werkstück (20) zur zweiten Bearbeitungsvorrichtung (10.2) transportiert wird oder an der zweiten Bearbeitungsvorrichtung (10.2) vorliegt.

7. Überwachungsverfahren (100) nach einem der Ansprüche 1 bis 6, **dadurch gekennzeichnet, dass** der Schritt d) durchgeführt wird, wenn das Werkstück (20) zur zweiten Bearbeitungsvorrichtung (10.2) transportiert wird oder an der zweiten Bearbeitungsvorrichtung (10.2) vorliegt.

8. Überwachungsverfahren (100) nach einem der Ansprüche 1 bis 7, **dadurch gekennzeichnet, dass** die Schritte b) und c) gleichzeitig durchgeführt werden.

9. Überwachungsverfahren (100) nach einem der Ansprüche 1 bis 8, **dadurch gekennzeichnet, dass** der Schritt d) durch die erste Überwachungseinheit (31) erfolgt, durch eine zweite Überwachungseinheit (33), die einer lokalen Steuereinheit (30) der zweiten Bearbeitungsvorrichtung (10.2) zugeordnet ist, und/oder durch eine übergeordnete Steuereinheit (40), die mit der ersten und zweiten Bearbeitungsvorrichtung (10.1, 10.2) verbunden ist.

10. Überwachungsverfahren (100) nach einem der Ansprüche 1 bis 9, **dadurch gekennzeichnet, dass** der Datensatz (34) mit dem werkstückspezifisch zugeordneten Spiegel-Werkstückparameter (37) einer Prozesskettensimulation bereitgestellt wird.

11. Betriebsverhalten (100) nach einem der Ansprüche 1 bis 10, **dadurch gekennzeichnet, dass** im Schritt b) auch eine Konfiguration (11) der ersten Bearbeitungsvorrichtung (10.1) erfasst wird und werkstückspezifisch im Datensatz (34) gespeichert ist.

12. Computerprogrammprodukt (60) zum Betreiben eines Fertigungssystems (50), das zu einem Erzeugen von Steuerbefehlen für eine erste und/oder zweite Bearbeitungsvorrichtung (10.1, 10.2) und Empfangen von Datensätzen (34) von der ersten und/oder zweiten Bearbeitungsvorrichtung (10.1, 10.2) ausgebildet ist, **dadurch gekennzeichnet, dass** das Computerprogrammprodukt (60) zu einem Durchführen eines Überwachungsverfahrens (100) nach einem der Ansprüche 1 bis 11 ausgebildet ist.

13. Übergeordnete Steuereinheit (40), die über eine kommunikative Datenverbindung (41) mit einer ersten und einer zweiten Bearbeitungsvorrichtung (10.1, 10.2) verbindbar ist und zum Ausgeben von Steuerbefehlen ausgebildet ist, **dadurch gekennzeichnet, dass** die übergeordnete Steuereinheit (40) zum Durchführen eines Überwachungsverfahrens (100) nach einem der Ansprüche 1 bis 11 ausgebildet ist.

14. Fertigungssystem (50), umfassend zumindest eine erste und eine zweite Bearbeitungsvorrichtung (10.1, 10.2), die zu einem Bearbeiten eines Werkstücks (20) miteinander verkettet sind, umfassend eine übergeordnete Steuereinheit (40), die über eine kommunikative Datenverbindung (41) jeweils mit der ersten und zweiten Bearbeitungsvorrichtung (10.1, 10.2) verbunden ist, **dadurch gekennzeichnet, dass** die übergeordnete Steuereinheit (40) nach Anspruch 13 ausgebildet ist.

15. Simulationsprogrammprodukt (70) zum Simulieren eines Bearbeitungsverhaltens eines Werkstücks (20), das ausgehend von einem Rohzustand veränderbar ist, und dazu ausgebildet ist, zumindest einen Spiegel-Werkstückparameter (37) des Werkstücks (20) zu ermitteln, **dadurch gekennzeichnet, dass** das Simulationsprogrammprodukt (70) zu einem Durchführen eines Überwachungsverfahrens (100) nach einem der Ansprüche 1 bis 11 geeignet ist.

16. Verwendung eines Simulationsprogrammprodukts (70) zu einem Überwachen eines Fertigungssystems (50), in dem ein Werkstück (20) bearbeitet wird, **dadurch gekennzeichnet, dass** das Simulationsprogrammprodukt (70) zu einem Simulieren eines Bearbeitungsverhaltens des Werkstücks (20) im Fertigungssystem (50) ausgebildet ist.
